# EUROPÄISCHE PATENTANMELDUNG

(11) **EP 4 303 609 A1**
(43) Veröffentlichungstag der Anmeldung: **10.01.2024**
(21) Anmeldenummer: 22183105.0
(22) Anmeldetag: 05.07.2022
(51) Int. Cl.: G01S 7/02, G01S 7/03, G01F 23/284, H01Q 1/22, H01Q 13/02, H01Q 17/00, H01P 5/02, H01P 3/12

(54) **RADARSENSOR UND HF-ADAPTER FÜR EINEN RADARSENSOR**

(71) Anmelder: VEGA Grieshaber KG, 77709 Wolfach (DE)
(72) Erfinder: ILG, Thomas, 77716 Haslach (DE); BAUR, Roland, 78126 Königsfeld (DE); BADER, Tobias, 77716 Haslach (DE)
(74) Vertreter: Maiwald GmbH

(57) **Zusammenfassung**

Radarsensor (100), aufweisend einen Hohlleiter (104), in den elektromagnetische Wellen eingekoppelt werden und einen HF-Adapter (102) mit einem Absorber (200), wobei der Absorber den Hohlleiter zumindest teilweise umgibt und ein elektrisches Bauteil zum Absorbieren von elektromagnetischen Wellen ist sowie gleichzeitig ein mechanisches Bauteil des Radarsensors ist.

## Beschreibung

### Gebiet der Erfindung

Die Erfindung betrifft einen Radarsensor, eine Verwendung eines Absorbers als mechanisches Bauteil in einem Radarsensor, und einen Hochfrequenz- (HF-) Adapter mit einem solchen Absorber.

### Stand der Technik

In Radarsensoren, beispielsweise zur Füllstandmessung von Flüssigkeiten und Schüttgütern zur Überwachung industrieller Prozesse, werden von einem HF-Chip erzeugte elektromagnetische Wellen in einen Hohlleiter eingekoppelt, der beispielsweise zu einem Hornstrahler aufgeweitet wird um die leitungsgebundene Welle im Hohlleiter als Raumwelle abzustrahlen oder als Antennenzuführung dient. Wird bei der Einkopplung eine galvanische Trennung eingefügt, entweichen die Wellen aus dem Hohlleiter. Hierbei breiten sie sich entlang von z.B. Gehäuseteilen oder anderen Strukturen aus und werden reflektiert. Durch die damit einhergehenden unterschiedlichen Laufzeiten entsteht eine Interferenz mit den Wellen im Hohleiter. Um dies zu vermeiden, werden Absorber eingesetzt. Der Radarsensor kann so konstruiert sein, dass der Absorber in den Radarsensor innerhalb des Sensorgehäuses eingebracht werden kann. Beispielsweise wird er eingeklebt. Die Bereitstellung der Absorberfunktion durch den Absorber bedarf eines mechanischen Aufwands, um den Absorber in seiner bestimmten Position zu halten. Nuten für Dichtungen müssen so eingebracht werden, dass sie die Funktion des Absorbers nicht beeinträchtigen.

### Zusammenfassung der Erfindung

Eine Aufgabe der Erfindung könnte daher sein, einen verbesserten Radarsensor mit einem Absorber bereitzustellen.

Die Aufgabe wird durch die Gegenstände der unabhängigen Patentansprüche gelöst. Vorteilhafte Ausführungsformen sind Gegenstand der abhängigen Ansprüche, der folgenden Beschreibung, sowie der Figuren.

Die beschriebenen Ausführungsformen betreffen in ähnlicher Weise den Radarsensor, die Verwendung eines Absorbers als mechanisches Bauteil in einem Radarsensor, und den HF-Adapter. Synergieeffekte können sich aus verschiedenen Kombinationen der Ausführungsformen ergeben, obwohl sie möglicherweise nicht im Detail beschrieben werden.

In Ausführungsformen wird ein Radarsensor bereitgestellt, der eine Elektronikeinheit, die beispielsweise Chips zur HF-Signalerzeugung und -Konditionierung auf einer Platine aufweist. Die Elektronikeinheit erzeugt somit elektromagnetische Wellen und koppelt diese in einen Hohlleiter ein, der eine Zuführung zu einer Antenne darstellt oder Teil der Antenne ist, und/oder empfängt elektromagnetische Wellen von dem Hohlleiter. Der Hohlleiter verläuft hierfür beispielsweise in seiner Längsachse senkrecht zur Platine und wird durch mehrere Teile gebildet, die mechanische Unterstützung benötigen. Hierzu dient ein struktureller Aufbau, an dem die Platine befestigt werden kann und der diese Teile mit dem Hohlleiter stabil in seiner Position bzw. in dem Sollwinkel hält bzw. ihn stützt, und der mechanischen Schutz vor äußeren Kräften sowie Schutz vor der Umgebung bietet. Der mechanische Aufbau beinhaltet auch ein Gehäuse, wobei der hier betrachtete strukturelle, mechanische Aufbau sich innerhalb des Gehäuses befindet, und der hier als HF-Adapter bezeichnet wird. Der HF-Adapter kann ein oder mehrere Bauteile aufweisen. Ein hier ausgeführter Absorber, dessen eigentliche Funktion die Absorption von Störwellen ist, ist eines dieser Bauteile.

Gemäß einem ersten Aspekt wird ein Radarsensor bereitgestellt, der einen Hohlleiter zum Leiten von elektromagnetischen Wellen aufweist, und einen HF-Adapter mit einem Absorber, wobei der Absorber den Hohlleiter zumindest teilweise umgibt und ein elektrisches Bauteil zum Absorbieren von elektromagnetischen Wellen ist, sowie gleichzeitig ein mechanisches Bauteil des Radarsensors ist.

Unter "elektrisches Bauteil" ist hierbei zu verstehen, dass das Bauteil elektrisch wirksam ist, indem es elektromagnetische Wellen absorbiert.

Unter "mechanisches Bauteil" ist zu verstehen, dass das Bauteil ein funktional mechanisches Bauteil für den strukturellen, mechanischen Aufbau des Radarsensors ist und weitere mechanische Funktionen für den Sensor aufweist.

Ein struktureller, mechanischer Aufbau hat verschiedene mechanische Funktionen. Diese sind beispielsweise, dem Sensor mechanische Stabilität zu geben, Teile des Sensors zu schützen, Teile des Sensors zusammenzuhalten, Teile zu positionieren, eine Dichtigkeit bereitzustellen, etc. Mechanische Bauteile dieses Aufbaus unterstützen eines oder mehrere dieser Funktionen. Dementsprechend ist hierunter nicht zu verstehen, dass das mechanische Bauteil lediglich ein physischer Körper ohne mechanische Funktion ist, wie zum Beispiel ein physischer Körper oder Gegenstand, der nur elektrische Funktionen erfüllt oder erfüllen soll.

Der Absorber erfüllt somit neben seinen elektrischen Funktionen, nämlich elektromagnetische Wellen, insbesondere Störstrahlung zu absorbieren, auch essentielle mechanische Aufgaben wie z.B. die Vorgenannten. Der Absorber weist hierfür eine genügend hohe Dichte und Festigkeit auf.

Der Radarsensor ist beispielsweise und nicht ausschließlich ein industrieller Sensor zur Füllstandmessung oder Grenzstandmessung. Anwendungen sind z.B. Grenzstandmessung und Füllstandmessung von Flüssigkeiten und Schüttgütern, z.B. zur Überwachung industrieller Prozesse oder Füllstandmessung bei der Lagerung von hochreinem Wasser, oder Füllstand- und Grenzstandmessung im Ansatzbehälter von Milchkulturen. Der Hohlleiter kann beispielsweise ein Rundhohlleiter sein oder ein Rechteckhohlleiter.

Der Hohlleiter kann eine Antennenzuführung sein und/oder sich aufweiten, so dass er selbst eine Hornantenne bzw. Hornstrahler bildet oder in eine solche übergeht.

Gemäß einer Ausführungsform weist der Radarsensor ferner eine Elektronikeinheit mit einem HF-Bauteil und ein Adapterelement, das so ausgestaltet ist, dass an dessen ersten Seite die Elektronikeinheit und an dessen zweiten Seite der Absorber befestigt werden kann, auf.

Das Adapterelement ist vorzugsweise metallisch, beispielsweise ein Zink-Druckgusselement. Es kann aber auch aus einem anderen Metall oder teilweise aus Kunststoff bestehen, soweit es dazu fähig ist, das von dem HF-Chip generierte HF-Signal aufzunehmen und weiterzuleiten. Das Adapterelement dient der mechanischen Fixierung einer Platine der Elektronikeinheit auf einer ersten Seite, und des Absorbers auf der zweiten Seite. Die Platine ist beispielsweise beidseitig mit elektronischen Bauelementen bestückt. Sie weist insbesondere einen HF-Chip auf, der auf derjenigen Platinenseite angeordnet ist, die zum Adapterelement hin orientiert ist. Der HF-Chip weist als Ausgang bzw. Eingang eine Schnittstelle zu dem Hohlleiter auf. Der Hohlleiter kann bezüglich seiner Längsachse senkrecht zur Platine an dieser Schnittstelle ausgebildet bzw. angeordnet sein. Der Hohlleiter wird zumindest zum Teil von dem Adapterelement gebildet.

Gemäß einer Ausführungsform weist der HF-Adapter ferner ein Isolierelement und ein Hohlleiterbauteil auf, wobei das Isolierelement zwischen dem Adapterelement und dem Hohlleiterbauteil angeordnet ist.

Das Isolierelement ist ein Element zur galvanischen Trennung des Hohlleiterbauteils, das heißt, des zur Antennenöffnung führenden Hohlleiterabschnitts, von der Platine bzw. des auf dem gleichen Potential liegenden Adapterelements.

Der gesamte Hohlleiter wird durch eine Bohrung im vorzugsweise metallischen Adapterelement, das mit der Platine und insbesondere dem HF-Chip elektrisch verbunden ist, und dem Hohlleiterbauteil gebildet, und die elektromagnetische Welle wird in dem Hohlleiter durch das Adapterelement und das Hohlleiterbauteil zur Antenne geleitet. In vielen Anwendungsfällen wird eine galvanische Trennung zwischen der Elektronik, d.h. Platine und HF-Chip und der Antenne gefordert.

Diese galvanische Trennung kann - je nach Absorbermaterial - vollständig oder zumindest teilweise durch das Isolierelement erreicht werden, das zwischen den beiden Hohlleiterteilen eingefügt wird und den Hohlleiter somit in zwei Teile trennt, und welches somit ein Zwischenstück zwischen diesen beiden Teilen darstellt. Durch dieses nicht-metallische Zwischenstück entsteht ein Pfad für die elektromagnetischen Wellen aus dem Hohlleiter heraus, im Wesentlichen entlang der Oberflächen des Adapterelements und des Hohlleiterbauteils in den weiteren Sensorkörper. Der Absorber verhindert die Ausbreitung und die damit verbundenen Reflexionen und Störstrahlungen. Im Falle, dass der Absorber leitend ist, kann dieser zusätzlich isoliert werden, um eine Überbrückung der galvanische Trennung zu verhindern. Die zusätzliche Isolierung könnte aus einer Lackschicht oder einer zusätzlichen nichtleitenden Buchse bestehen, wie weiter unten beschrieben wird. Bei nichtleitenden Absorbern ist diese zusätzliche Isolierung nicht notwendig.

Das Isolierelement ist innen hohl und setzt somit den Hohlleiter fort, so dass die elektromagnetischen Wellen von dem ersten Hohlleiterteil zu dem zweiten Hohlleiterteil, hier als Hohlleiterbauteil bezeichnet, weitergeführt werden. Somit wird, z.B. sendeseitig, die von dem HF-Chip generierte Welle von dem Hohlleiterteil, der durch das Adapterelement gebildet wird, aufgenommen und über das Isolierelement zu dem Hohlleiterbauteil geführt, das die Welle zur Antennenöffnung leitet, wo sie abgestrahlt wird. Empfangsseitig erfolgt die Wellenleitung entsprechend in umgekehrter Richtung.

Das Hohlleiterbauteil ist somit ein von dem Adapterelement separates Element, das z.B. in seinem radialen Zentrum einen Teil des Hohlleiters ausbildet.

Das Hohlleiterbauteil wird, wie unten detaillierter ausgeführt, vom umgebenden Absorber gehalten. Die Form kann verengte und verbreiterte Abschnitte enthalten, die eine Bewegung in Richtung der zentralen Achse, d.h. zur Platine hin oder weg, verhindern.

Gemäß einer Ausführungsform ist das Hohlleiterbauteil ein Bauteil aus Metall oder ein metallisiertes Kunststoffteil.

Das Hohlleiterbauteil ist ausgebildet, den metallischen Hohlleiter bereitzustellen. Dies kann dadurch realisiert sein, dass das gesamte Hohlleiterbauteil metallisch ist. Alternativ kann das Hohlleiterbauteil aber auch ein Kunststoffteil mit metallischem Abschnitt sein. Insbesondere kann das Kunststoffteil metallisiert sein, wobei nur die Hohlleiter-Bohrung metallisiert ist. Hierdurch wird erreicht, dass das Hohlleiterbauteil innen leitend ist, aber nach außen isolierend ist.

Das Adapterelement ist beispielsweise in der Mitte, d.h. im Bereich des Hohlleiters, in einem radialen Schnitt gesehen T-förmig ausgeprägt und das Isolierelement komplementär ähnlich einer U-Form, so dass die beiden Teile ineinander eingesetzt werden können. Das Hohlleiterbauteil ist, in einem radialen Schnitt gesehen, ebenfalls ähnlich einer U-Form geformt und umgibt das Isolierelement seitlich außen sowie von der Bodenseite der U-Form. Somit ist das Isolierelement zwischen diesen Teilen fest eingebettet. Die Formen können jedoch auch in anderer Weise ausgebildet sein.

Gemäß einer Ausführungsform des Radarsensors umgibt der Absorber das Isolierelement und das Hohlleiterbauteil.

Dadurch, dass der Absorber das Isolierelement und das Hohlleiterbauteil umgibt, hält er das Element und das Bauteil. "Umgeben" bedeutet hierbei, dass der Absorber ähnlich einem Zylinder das Isolierelement bzw. das Hohlleiterbauteil in radialer Richtung umgibt und sich parallel zur Längsachse des Hohlleiters über das Isolierelement und das Hohlleiterbauteil erstreckt. Das Isolierelement ist optional und kann weggelassen werden, wenn eine galvanische Trennung nicht notwendig oder nicht erwünscht ist.

Das Adapterelement kann auch als Stecker angesehen werden, der den Teil des Sensors, der die Platine beherbergt, mit dem Teil des Sensors, der zur Abstrahlung der elektromagnetischen Wellen, d.h. beispielsweise zweiter Hohlleiterteil, Absorber, Isolierelement, etc., dient, verbindet. Ein Teil des Steckers, d.h. des Adapterelements, umgreift hierbei zumindest teilweise den Absorber, der innenseitig gegen ein den Hohlleiter beinhaltenden metallisches Teil stößt, das wiederum gegen einen ausragenden mittleren Teil des Steckers gedrückt wird. Somit werden sowohl der Absorber als auch zweite Hohlleiterteil und das Isolierelement gehalten, wenn sie in den so ausgestalteten Stecker eingesteckt werden. Weitere Fixierungsmaßnahmen sind hierbei nicht ausgeschlossen.

Mit der Fixierung des Absorbers erhält der Sensor, bzw. der innere Sensoraufbau somit eine Stabilität. Der Absorber kann einen bedeutenden Raum zwischen Gehäuse und weiteren Teilen ausfüllen, wie beispielsweise dem nachfolgend näher beschriebenen Hohlleiterbauteil, das teilweise den zweiten Hohlleiterteil umgibt bzw. in dem ein Teil des Hohlleiters ausgebildet ist, ausfüllen und kann sich ohne Einschränkung in Richtung Antennenöffnung erstrecken. Dem Absorber kommt somit eine tragende Funktion zur mechanischen Stabilität des Sensors zu.

Der Absorber weist vorzugsweise eine im Wesentlichen rotationssymmetrische, z.B. ringförmige Struktur auf. Das heißt, er hat eine rotationssymmetrische Grundstruktur, die beispielsweise bezüglich Elementen, die der Befestigung dienen, oder Nuten davon abweichen. Zu diesen Elementen zählen zum Beispiel Schraubenlöcher zur Aufnahmen von Schrauben oder Elementen zur Montage der Platine oder des HF-Chips. Die Nuten dienen beispielsweise der Aufnahme von Dichtungsringen. Im zusammengebauten Zustand befindet sich der Hohlleiter vorzugsweise im Zentrum des im Wesentlichen rotationssymmetrischen Absorbers.

Gemäß einer Ausführungsform weist der Absorber eine Isolierhülse auf, die zumindest teilweise mit einem Absorbermaterial gefüllt ist.

Der Absorber ist im zusammengebauten Zustand des Sensors zwischen dem Adapterelement aus Zinkdruckguss und dem Hohlleiterbauteil, das den zweiten Hohlleiterteil beinhaltet, angeordnet. Da das Absorbermaterial eine gewisse Leitfähigkeit aufweisen kann, um seine Funktion zu erfüllen, würde dies die gewünschte galvanische Trennung aufheben. Daher ist das Absorbermaterial mit einem Isoliermaterial ummantelt, so dass die galvanische Trennung sichergestellt ist. Das Isoliermaterial, beispielsweise Kunststoff, bildet somit eine Isolierhülse für das Absorbermaterial. Die Isolierhülse ist vorzugsweise vollständig mit dem Absorbermaterial gefüllt, kann aber auch nur teilweise damit gefüllt sein.

Gemäß einer Ausführungsform weist der Absorber eine Grenzfläche zu einem Gehäuse auf.

Die Grenzfläche stellt somit eine Außenseite des Absorbers dar, die direkt am Gehäuse anliegt. Auch durch diese Maßnahme wird die Struktur stabilisiert. Der Begriff "außen" wird hierin bezüglich einer radialen Richtung von einer zentralen Achse, die durch den Hohlleiter gebildet wird, hin zu dem Gehäuse, verwendet.

Hierbei kann beispielsweise eine Passung, z.B. eine Presspassung verwendet werden, mittels derer der Absorber eingepasst oder eingeklemmt, bzw. gehalten wird. Beispielsweise weist der Absorber zur Passung an dieser Stelle ein Übermaß auf.

Im Anschluss an das Adapterelement besteht in Richtung Antennenöffnung ein freier Raum, in dem der Absorber prinzipiell beliebig ausgestaltet werden kann. So kann er sich zwischen dem Hohlleiterbauteil mit dem zweiten Hohlleiterteil und dem Gehäuse erstrecken. Das Hohlleiterbauteil presst den Absorber somit radial gegen das Gehäuse, wodurch die Anordnung zusätzliche Stabilität erlangt und der zweite Hohlleiterteil zentriert wird.

Gemäß einer Ausführungsform weist der Absorber an seiner Außenseite ein Gewinde zum Verschrauben des Absorbers mit einem Gehäuse des Radarsensors auf oder eine Passung zum Einpassen des Absorbers in ein Gehäuse des Radarsensors.

Das Gewinde ist eine weitere Maßnahme, die zur mechanischen Stabilität des Sensors beiträgt, und die den Absorber und damit indirekt die Bauteile innerhalb des Absorbers zusammenhält und stabilisiert. Der Absorber kann weitere Gewinde aufweisen, die z.B. zur Aufnahme von Schrauben dienen, so dass er mit anderen Teilen des Sensors mittels Schrauben verbunden werden kann oder zum Verbinden mit dem bereits genannten Hohlleiterbauteil. Die Schrauben und die Verschraubungen werden hierbei derart ausgestaltet, dass keine leitende Verbindung zwischen dem Adapterelement und dem Hohlleiterbauteil hergestellt wird.

Gemäß einer Ausführungsform sind Oberflächen des Absorbers planar.

Planar bedeutet hierbei, dass die Oberflächen keine Oberflächenstruktur, wie zum Beispiel Rillen oder andere Muster aufweisen, abgesehen von Gewinden, Nuten oder sonstigen Strukturen mit einer mechanischer Funktion.

Gemäß einer Ausführungsform weist das Hohlleiterbauteil eine umlaufende Nut zur Aufnahme eines Dichtungsrings auf.

Der Dichtungsring, z.B. ein O-Ring, ist eingerichtet, eine Dichtung zwischen dem Absorber und dem Hohlleiterbauteil bereitzustellen. Hierdurch wird verhindert, dass aus Richtung der Antenne oder aus der Umgebung des Sensors, z.B. durch das Gehäuse oder den Deckel, Substanzen oder Medien, z.B. Flüssigkeiten oder Dämpfe, in den Radarsensor eindringen können.

Die Nut kann an dieser Stelle alternativ oder zusätzlich zu einer weiteren Nut in den Absorber eingebracht sein. Eine Nut für einen Dichtungsring kann auch an weiteren Stellen des Absorbers oder der mechanischen Struktur vorhanden sein. Beispielsweise kann sich eine Nut für eine Dichtung zwischen dem Absorber und dem Adapterelement befinden. Der Absorber unterstützt somit eine Dichtfunktion.

Die Dichtfunktion kann auch durch eine Presspassung, ein Gewinde oder durch eine Klebeverbindung erreicht werden.

Gemäß einer Ausführungsform weist der Absorber einen umlaufenden Zentrierabschnitt auf, der eingerichtet ist, das Adapterelement und/oder das Hohlleiterbauteil zu zentrieren.

Die Form des Zentrierabschnitts kann zylindrisch sein. Das Adapterelement kann so ausgestaltet sein, dass es umfänglich bis hin zum Gehäuse eine Auskragung in Richtung Antenne bzw. Abstrahlrichtung aufweist. Der Zentrierabschnitt und das Adapterelement können so ausgestaltet sein, dass die innere Seite des umlaufenden, auskragenden Teils des Adapterelements und die äußere Seite des weiter innen liegenden, umlaufenden Zentrierabschnitts aneinander anliegen bzw. ineinandergreifen, so dass sich das Adapterelement und der Absorber zueinander positionieren, bzw. zentrieren.

Der Zentrierabschnitt geht in den weiteren Teil des Absorbers über. Der Absorber einschließlich des Zentrierabschnitts bilden eine Hülle um das optionale Isolierelement und das Hohlleiterbauteil. Da der Absorber das Hohlleiterbauteil umgibt, wird die gesamte Anordnung aus Absorber, Hohlleiterbauteil, Isolierelement und Hohlleiter zentriert, wobei die Achse des Hohlleiters die zentrale Achse dieser Anordnung bildet.

Zusätzlich wird eine Zentrierung durch eine Ausgestaltung des Absorbers und des metallischen Teils im unteren Bereich des Sensors bereitgestellt. Unter "unterem Bereich" wird hierbei der Bereich des Sensors verstanden, der nahe der Antennenapertur ist. Der "obere" Bereich ist demgemäß der Bereich nahe der Elektronikeinheit, zu dem auch das Adapterelement gezählt wird. Das Hohlleiterbauteil kann in dem so definierten unteren Bereich eine Verbreiterung aufweisen, in welchem sich auch die Nut für den Dichtring befinden kann. Entsprechend kann der Absorber in diesem Bereich eine Verengung bzw. eine umlaufende Aussparung aufweisen, so dass der Absorber und das Hohlleiterbauteil auch in diesem Bereich komplementär sind und aneinander anliegen. Hierdurch wird eine Zentrierung des Hohlleiterbauteils erreicht.

Zur Isolierung können somit drei unterschiedliche Maßnahmen für sich alleine oder in Kombination miteinander ergriffen werden: Adapterelement aus Kunststoff mit einem metallisierten Hohlleiterteil, Absorber mit einer Kunststoffhülse und Hohlleiterelement mit einem metallisierten Hohlleiter. Bei allen genannten Maßnahmen dient zusätzlich ein Isolierelement zwischen den Hohlleiterteilen zur galvanischen Trennung.

Es wird in dieser Offenbarung somit auch ein Absorber für einen Radarsensor beschrieben. Der Absorber umgibt einen Hohlleiter des Radarsensors und ist sowohl ein elektrisches Bauteil zum Absorbieren von elektromagnetischen Wellen als auch gleichzeitig ein mechanisches Bauteil des strukturellen mechanischen Aufbaus des Radarsensors.

Gemäß einem weiteren Aspekt wird ein HF-Adapter mit einem Absorber für einen Radarsensor bereitgestellt, wobei der Absorber ausgebildet ist, einen Hohlleiter des Radarsensors zumindest teilweise zu umgeben, und wobei der Absorber ein elektrisches Bauteil zum Absorbieren von elektromagnetischen Wellen ist und gleichzeitig ein mechanisches Bauteil des Radarsensors ist.

Der Hohlleiter kann z.B. durch eine Bohrung im Adapterelement, und dem Hohlleiterbauteil sowie einer Fortführung im Isolierelement dazwischen gebildet werden.

Gemäß einem weiteren Aspekt wird eine Verwendung eines Absorbers als mechanisches Bauteil in einem Radarsensor bereitgestellt.

"Mechanisches Bauteil" bedeutet hierbei, dass das Element bzw. der Absorber mechanische Funktionen, wie oben erläutert, erfüllt.

Andere Variationen der offenbarten Ausführungsformen können vom Fachmann bei der Durchführung der beanspruchten Erfindung durch das Studium der Zeichnungen, der Offenbarung und der beigefügten Ansprüche verstanden und ausgeführt werden. In den Ansprüchen schließt das Wort "umfassend" andere Elemente oder Schritte nicht aus, und der unbestimmte Artikel "ein" oder "eine" schließt eine Vielzahl nicht aus. Die bloße Tatsache, dass bestimmte Maßnahmen in voneinander abhängigen Ansprüchen angegeben sind, bedeutet nicht, dass eine Kombination dieser Maßnahmen nicht vorteilhaft genutzt werden kann.

### Kurze Beschreibung der Figuren

Im Folgenden werden Ausführungsbeispiele der Erfindung anhand der schematischen Zeichnungen näher erläutert. Hierbei zeigt
- Fig. 1: eine schematische Skizze eines Radarsensors,
- Fig. 2: ein Diagramm eines Radarsensors in einer ersten Schnittansicht,
- Fig. 3: ein Diagramm eines Radarsensors in einer zweiten Schnittansicht,
- Fig. 4: ein Diagramm eines Radarsensors in einer alternativen Ausführungsform,
- Fig. 5: ein Diagramm eines Absorbers im Schnitt,
- Fig. 6: ein Diagramm eines Absorbers in einer 3D-Ansicht.

Einander entsprechende Teile sind in allen Figuren mit den gleichen Bezugszeichen versehen.

### Ausführungsbeispiele

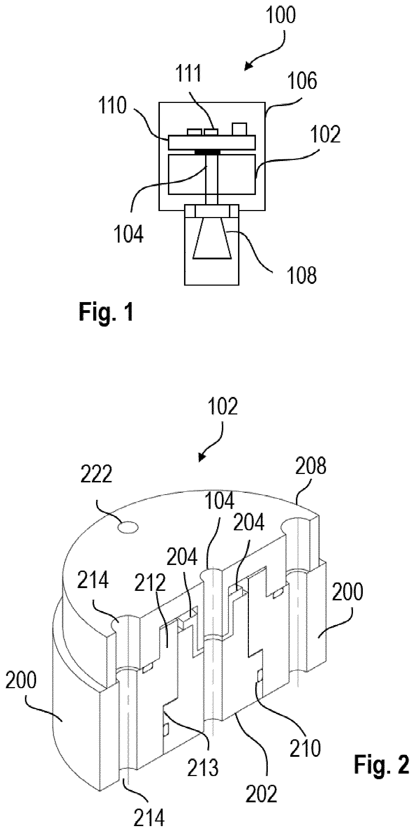

Fig. 1 zeigt schematisch einen Radarsensor 100 mit einem HF-Adapter 102, einem Hohlleiter 104, einem Gehäuse 106, einer Hornantenne 108, einer Elektronikeinheit mit einer Platine 110, und einem HF-Chip 111. Die Elektronikeinheit kann mehrere Platinen und weitere elektronische Bauelemente sowie Schnittstellen nach außen aufweisen. Auf der Platine 110 können demgemäß mehrere elektronische und elektromechanische Bauteile angeordnet sein, wie beispielsweise Prozessoren, aktive und passive Bauelemente zur Signalaufbereitung, Stecker und Verbinder, etc. Die bestückte Platine 110 bildet somit die Elektronikeinheit oder zumindest einen Teil der Elektronikeinheit. Das Gehäuse 106 ist in Fig. 1 zum Zweck der übersichtlicheren Darstellung mit Abstand zu dem HF-Adapter 102 eingezeichnet, liegt aber vorzugsweise an dem HF-Adapter 102 an, bzw. ist mit diesem verbunden. Die Platine 110 ist mit dem HF-Adapter 102 beispielsweise verschraubt.

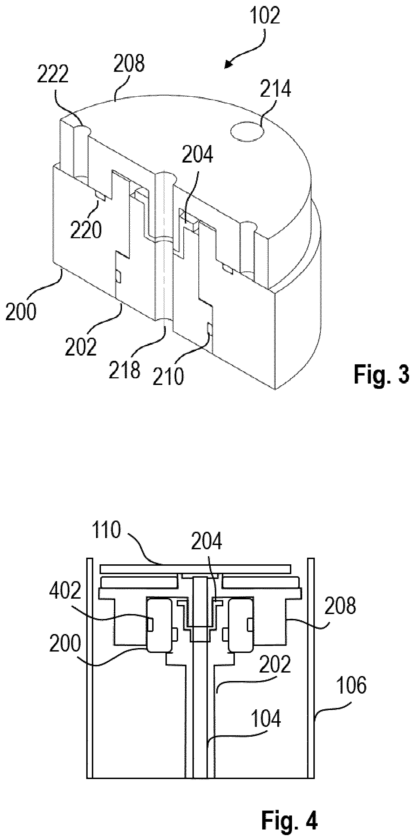

Figuren 2 und 3 zeigen den HF-Adapter 102 mit einem Absorber 200, einem Hohlleiterbauteil 202, einem Isolierelement 204 und einem Adapterelement 208. Bezugszeichen sind zum Teil zur Verdeutlichung an mehreren Stellen eines Elements eingezeichnet. Die Bezugszeichen in den beiden Figuren ergänzen sich. Diese Elemente bzw. Bauteile sind von einem Gehäuseteil des Gehäuses 106 umgeben (in Fig. 2 und 3 nicht eingezeichnet). Das Gehäuseteil kann zylindrisch sein und die vorgenannten sowie die nachgenannten Bauteile einschließen. Das Adapterelement 208 kann auch gemäß seiner mechanischen Funktion als Befestigungselement oder Trägerelement bezeichnet werden und ist zwischen der in Fig. 1 gezeigten Platine 110 und weiteren Elementen wie Absorber 200, Hohlleiterbauteil 202 und Isolierelement 204 angeordnet. Das Isolierelement 204, das Adapterelement 208 und das Hohlleiterbauteil 202 sind derart ausgebildet, dass sie den Hohlleiter 104 bilden. Der Hohlleiter 104 verläuft senkrecht von der Ebene der Platine 110 weg und verläuft parallel zur zylindrischen Gehäusewandung, so dass der Hohlleiter 104 und das Gehäuseteil eine gemeinsame zentrale Achse 218 aufweisen, die senkrecht auf der Platinenebene steht. Es versteht sich, dass es hiervon auch Abweichungen im Rahmen fachmännischen Wissens und Vorgehens geben kann. Beispielsweise können die hier beschriebenen zylindrischen bzw. runden Formen auch oval, rechteckig oder anders geformt sein. Das Gehäuse 106 kann eine oder mehrere Verjüngungen oder Verbreiterungen aufweisen. Weiterhin können die Achsen des Gehäuses 106 und des Hohlleiters 104 voneinander abweichen, solange die elektrischen und mechanischen Eigenschaften gewahrt bleiben.

Als ein geometrisch zentrales Element in den Figuren 2 und 3 kann das Isolierelement 204 gesehen werden. Das Isolierelement 204 kann seitlich eine Schnappverschluss-Struktur aufweisen, die in eine Aussparung des Hohlleiterbauteils 202 eingreift, so dass das Isolierelement 204 bei der Montage in das Hohlleiterbauteil hineingeschoben werden kann und die Nase der Schnappverschluss-Struktur in die Aussparung einrastet, so dass das Isolierelement 204 in dem Hohlleiterbauteil 202 fixiert ist. Das Isolierelement 204 ist in der Schnittansicht in den Figuren 2 und 3 eckig U-förmig, bzw. unter Berücksichtigung der drei Dimensionen topfförmig ausgestaltet, und kann aber auch beispielsweise treppenförmig mit einer mittleren Treppenstufe ausgestaltet sein. Das Hohlleiterbauteil 202 weist eine passende komplementäre Struktur auf, um das Isolierelement 204 aufnehmen zu können. Ein überragender Rand der U-Form bzw. Topf-Form des Isolierelements 204 liegt im montierten Zustand an den Endkanten der U-förmigen Struktur des Hohlleiterbauteils 202 an, so dass das Isolierelement 204 außenseitig größtenteils an dem Hohlleiterbauteil 202 anliegt. Das Adapterelement 208 ist im zentralen Bereich stiftförmig, d.h. es weist im Bereich des Isolierelements 204 in der Schnittansicht eine T-Form auf, wobei der (hohle) Stift bzw. das ausragende Mittelstück des T-förmigen Abschnitts des Adapterelements 208 sich passend in das Isolierelement 204 einfügt, so dass dieses Stück zentriert in dem Isolierelement 204 sitzt und das Isolierelement 204 sowie das Hohlleiterbauteil 202 durch die vorgenannten U-förmigen bzw. topfförmigen Strukturen ebenfalls zentriert sind. Das Isolierelement 204 bewirkt eine galvanische Trennung zwischen den Adapterelement 208 und dem Hohlleiterbauteil 202, d.h. dem Teil des Hohlleiters, der an den HF-Chip bzw. Platine angebunden ist und dem Teil des Hohlleiters, der mit der Antenne verbunden ist.

Das Hohlleiterbauteil 208 kann entlang der zentralen Achse 218 in Richtung Antenne 108 zunächst taillenartig oder wie in Fig. 2 und 3 gerade ausgestaltet sein und anschließend einen breiten Abschnitt aufweisen. Die taillenförmige Ausprägung ist eine von mehreren hier beschriebenen Maßnahmen, wie z.B. Verschraubung oder Zentrierung, um einen präzisen Sitz des Absorbers 200 und des Hohlleiterbauteils 202 zu gewährleisten.

Der breite Abschnitt des Hohlleiterbauteils 202 weist eine umlaufende Nut 210 auf, in die eine Dichtung eingesetzt werden kann. Durch das Adapterelement 208, das Isolierelement 204 und das Hohlleiterbauteil 202 verläuft zentral der Hohlleiter 104. Der Absorber 200 umschließt umlaufend das Hohlleiterbauteil 202 und das Isolierelement 204. Das Adapterelement 208 weist in seinem äußeren Bereich, das heißt, in dem Abschnitt, der in radialer Richtung an den T-förmigen Abschnitt anschließt, eine breite Auskragung von der Platine 110 weg auf, so dass die T-Form zu einer - in der Schnittebene gesehen - E-Form eines bezüglich des T liegenden E erweitert wird. Die Auskragung entspricht hierbei den oberen und unteren Strichen des liegenden E und verläuft in der Draufsicht kreisförmig. Die Auskragung ist hierbei breit genug, um Bohrungen 214, 222 oder Löcher 214, 222 zu enthalten, die eine Schraube aufnehmen können. Die Bohrungen bzw. Löcher 214, 222 können hierbei durch die gesamte Dicke des Adapterelements 208 verlaufen. Ein Teil der Bohrungen 214 bzw. Schraubenlöcher 214 können in den Absorber 200 hineinragen, so dass das Adapterelement 208 mit dem Absorber 200 mittels einer Schraubverbindung verbunden werden kann. Das Adapterelement 208 kann hierfür in der Auskragung eine Vertiefung enthalten, so dass die Platine 110 die Köpfe der Schrauben abdeckt. Somit weist der Absorber 200 eine Bohrung 214 bzw. ein Schraubenloch 214 auf, die bzw. das die Schraube aufnehmen kann. Weitere Bohrungen 222 bzw. Schraubenlöcher 222 verbinden die Platine 110 mit dem HF-Adapter 102. Dies ermöglicht, dass der HF-Chip 111 bei der Montage fest an das Adapterelement angeschraubt werden kann und der Chip 111 HF-dicht mit dem Hohlleiter verbunden werden kann, und das Adapterelement 208 in einem unabhängigen Schritt mit dem Absorber einschließlich dem Hohlleiterbauteil 202 und dem Isolierelement 204 montiert werden kann. Alternativ kann die Elektronikeinheit mit dem Adapterelement und dem Absorber direkt verschraubt werden.

Der Absorber weist ferner einen Zentrierabschnitt 212 auf, der zylindrisch den Absorber zur Platine 110 hin erweitert und mit seinem Endstück an der Grundseite und mit seiner äußeren Seite an der Innenseite der Auskragung des Adapterelements 208 anliegt, so dass sich das Adapterelement 208 und der Absorber 200 zueinander positionieren, bzw. zentrieren.

Der Zentrierabschnitt 212 geht in den weiteren Teil des Absorbers 200 über. Der Absorber 200 einschließlich des Zentrierabschnitts 212 umhüllen das Isolierelement 204 und das Hohlleiterbauteil 202. Auch der Abschnitt 213 hat die Funktion eines Zentrierabschnitts. Die Innenseite des Zentrierabschnitt 213 liegt hierzu an der Außenseite des Hohlleiterbauteils 202 an.

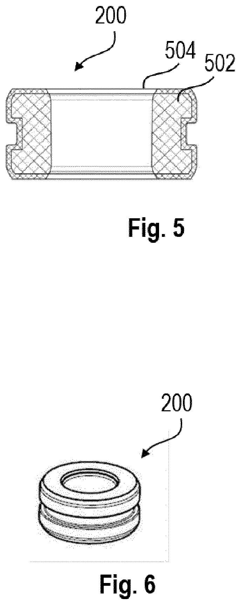

Fig. 4 zeigt ein Diagramm eines Teils eines Sensors 100 mit einem Absorber 200 gemäß einem weiteren Ausführungsbeispiel, bei dem der Absorber eine Isolierhülse 504 aufweist. Ein solcher Absorber ist in Figuren 5 und 6 skizziert. Der Absorber 200 ist in diesem Ausführungsbeispiel ringförmig und besteht aus einer Isolationsschicht 504 aus Kunststoff. Die Isolationsschicht 504 bildet eine Hülse 504, die einen absorbierenden Füllstoff, z.B. Kohlefaser, enthält. Die Isolationsschicht 504 ist beispielsweise aus einem thermoplastischen Kunststoff, wie beispielsweise PVDF (Polyvinylidenfluorid). Weiterhin weist der Absorber 200 eine Nut 506 für eine Dichtung 402 auf.

Somit wird ein Radarsensor 100 mit einen Hohlleiter 104 zum Leiten von elektromagnetischen Wellen und einem HF-Adapter 102 mit einem Absorber 200 bereitgestellt, wobei der Absorber 200 den Hohlleiter 104 zumindest teilweise umgibt und ein elektrisches Bauteil 202 zum Absorbieren von elektromagnetischen Wellen ist, sowie gleichzeitig ein mechanisches Bauteil 202 des Radarsensors 100 ist, das heißt ein Bauteil mit den hierin genannten und beschriebenen elektrischen und mechanischen Funktionen. Des Weiteren wird in Ausführungsformen eine Isolierfunktion insbesondere des Absorbers 200, aber auch des Hohlleiterbauteils 202 und des Adapterelements 108 präsentiert.

### Bezugszeichenliste

- 100: Radarsensor
- 102: HF-Adapter
- 104: Hohlleiter
- 106: Gehäuse
- 108: Hornantenne
- 110: Platine
- 111: HF-Chip
- 200: Absorber
- 202: Hohlleiterbauteil
- 204: Isolierelement
- 208: Adapterelement
- 210: Nut für Dichtung
- 212: Absorberabschnitt zur Zentrierung
- 213: weiterer Absorberabschnitt zur Zentrierung
- 214: Schraubenbohrung / Loch für Schraube
- 218: zentrale Achse
- 220: Nut für Dichtung
- 222: Schraubenbohrung / Loch für Schraube
- 402: Dichtung
- 502: Kunststoffhülse
- 504: Absorbermaterialfüllung
- 506: Nut

## Patentansprüche

1. Radarsensor (100), aufweisend
einen Hohlleiter (104) zum Leiten von elektromagnetischen Wellen; und
einen HF-Adapter (102) mit einem Absorber (200), wobei der Absorber (200) den Hohlleiter (104) zumindest teilweise umgibt und ein elektrisches Bauteil (202) zum Absorbieren von elektromagnetischen Wellen ist, sowie gleichzeitig ein mechanisches Bauteil (202) des Radarsensors (100) ist.

2. Radarsensor (100) nach Anspruch 1, wobei der Radarsensor (100) ferner eine Elektronikeinheit (110, 111) mit einer Platine (110) und einem Hochfrequenz- (HF-) Bauteil (111) und ein Adapterelement (208), das so ausgestaltet ist, dass an dessen ersten Seite die Elektronikeinheit (110, 111) und an dessen zweiten Seite der Absorber (200) befestigt werden kann, aufweist.

3. Radarsensor (100) nach Anspruch 2, wobei der HF-Adapter (102) ferner ein Isolierelement (204) und ein Hohlleiterbauteil (202) aufweist, wobei das Isolierelement (204) zwischen dem Adapterelement (208) und dem Hohlleiterbauteil (202) angeordnet ist.

4. Radarsensor (100) nach Anspruch 3, wobei der Absorber (200) das Isolierelement (204) und das Hohlleiterbauteil (202) zumindest teilweise umgibt.

5. Radarsensor (100) nach Anspruch 3 oder 4, wobei das Hohlleiterbauteil (202) ein Bauteil (202) aus Metall oder ein metallisiertes Kunststoffteil ist.

6. Radarsensor (100) nach Anspruch 1 oder 2, weist der Absorber eine Isolierhülse (502) auf, die zumindest teilweise mit einem Absorbermaterial gefüllt ist.

7. Radarsensor (100) nach einem der vorhergehenden Ansprüche, wobei der Absorber (200) eine Grenzfläche zu einem Gehäuse (106) aufweist.

8. Radarsensor (100) nach Anspruch 3, wobei der Absorber (200) an seiner Außenseite ein Gewinde (106) zum Verschrauben des Absorbers (200) mit dem Gehäuse (106) des Radarsensors (100) oder eine Passung zum Einpassen des Absorbers (200) mit dem Gehäuse (106) des Radarsensors (100) aufweist.

9. Radarsensor (100) nach einem der vorhergehenden Ansprüche, wobei Oberflächen des Absorbers (200) planar sind.

10. Radarsensor (100) nach einem der Ansprüche 3 bis 5, wobei das Hohlleiterbauteil (202) eine umlaufende Nut (210) zur Aufnahme eines Dichtungsrings aufweist.

11. Radarsensor (100) nach einem der vorhergehenden Ansprüche, wobei der Absorber (200) eine umlaufende Nut (220) zur Aufnahme eines Dichtungsrings aufweist.

12. Radarsensor (100) nach einem der vorhergehenden Ansprüche, wobei der Absorber (200) einen umlaufenden Zentrierabschnitt (212, 213) aufweist, der eingerichtet ist, das Adapterelement (208) und/oder das Hohlleiterbauteil (202) zu zentrieren.

13. Verwendung eines Absorbers (200) als mechanisches Bauteil (202) in einem Radarsensor (100).

14. HF-Adapter (102) für einen Radarsensor (100), aufweisend einen Absorber (200), wobei der Absorber (200) ausgebildet ist, einen Hohlleiter (104) des Radarsensors (100) zumindest teilweise zu umgeben; und wobei der Absorber (200) ein elektrisches Bauteil (202) zum Absorbieren von elektromagnetischen Wellen ist und gleichzeitig ein mechanisches Bauteil (202) des Radarsensors (100) ist.
